# EUROPEAN PATENT SPECIFICATION

(11) **EP 0 486 238 B1**
(45) Date of publication and mention of the grant of the patent: **23.08.1995**
(21) Application number: 91310384.2
(22) Date of filing: 11.11.1991
(51) Int. Cl.: B23D 61/18, B24D 5/00, B24D 18/00

(54) **Wire saws**
Drahtsägen
Scies à fil

(30) Priority: 16.11.1990 GB 9024909
(43) Date of publication of application: 20.05.1992
(73) Proprietor: UNICORN ABRASIVES LIMITED, Stafford, Staffordshire ST16 1EA (GB)
(72) Inventor: Davies, Peter H., Dursley, Gloucestershire GL11 5QP (GB); Lear, Clive, Lydney, Gloucestershire (GB)
(74) Representative: Shaw, Laurence

(56) References cited:
- EP-A- 0 090 274
- EP-A- 0 256 619
- FR-A- 949 457
- FR-E- 57 364
- JP-A-46 018 553
- PATENT ABSTRACTS OF JAPAN, vol. 13, no. 385 (M-864)(3733), 25th August 1989;& JP-A-01 135 414 (SANWA DAIYAMONDO KOGYO K.K.) 29-05-1989
- SOVIET INVENTIONS ILLUSTRATED, section PQ, week 9004, 7th March 1990, classP64, AN 90-029038/04, Derwent Publications Ltd, London, GB; &SU-A-1 491 736 (ODESS UNIV.) 07-07-1989

## Description

This invention relates to wire saws and particularly to the abrasive elements or beads of such saws; see EP-A 0 256 619.

Wire saws are well known and basically comprise a steel wire rope to which are attached at intervals along its length, abrasive beads, usually of bonded diamond particles. The abrasive beads, which heretofore have been of right circular cylindrical shape, are normally attached to the wire rope by means of an axial bore through the cylindrical beads by which means they are threaded onto the wire rope.

The abrasive beads are usually made by bonding diamond particles in a metallic bonding medium, the diamond and metallic particle mixture being moulded to the desired cylindrical form.

Wire saws are used particularly to cut stone, rock or concrete and may be several metres long and are power driven. A particular problem that has been found to exist is at the beginning and early stages of cutting with new abrasive beads when the abrasive diamond particles are embedded in the bonding matrix and hence, not being exposed, cannot have the desired cutting effect. The stone, concrete or rock into which the saw is being forced into contact must wear away sufficient of the bonding material to expose the diamond before the abrasive beads actually begin to wear away or cut the rock etc. It has, therefore, been found that during this start up period, the force required to be exerted by the wire saw to break through an adequate amount of the contact area between the cylindrical abrasive bead and the material to be cut is higher than that needed to maintain cutting afterwards. Indeed, it can be excessively high and high enough on occasions to break the wire rope or to overheat the motor driving the saw. Therefore, during the start up period, it is usual to cut at a slow speed and, indeed, if higher speeds are used at this stage, there is a serious risk of deviation of the wire from the desired cut.

In order to ameliorate this problem it is normal for the beads to be subjected to a further manufacturing process before they are attached to the wire rope. This is to abrade the cylindrical surface, e.g. by jet blasting or other suitable means, to remove the surface covering of the bonding medium and to expose the abrasive particles. This, of course, adds to the cost of the process and it is difficult, if not impossible, to ensure consistency of finish of the surfaces of the abraded beads. Even when this has been done, it is usually found necessary for the user of the saw to run the wire very slowly in its first start-up period or to run the saw through an especially abrasive medium in order to achieve the desired exposure of abrasive particles.

It will be appreciated that as a conventional cylindrical bead on a wire comes into initial contact with a lump of, say, stone, there will be a narrow line of contact running the length of the bead. Moreover, when the bead completes a circuit on the wire and returns for its next contact with the stone, the wire will probably have rotated transversely so that a different line of contact is engaged on the bead surface. This will continue for a number of circuits until the whole surface of the bead will eventually have been 'scoured' to expose abrasive particles. Thus, a relatively long period of start-up is required before an adequately-desired cut is obtained with sufficiently-exposed abrasive on the beads'surfaces.

We have now found that this problem can be satisfactorily overcome by changing the shape of the conventionally right cylindrical beads so that an extra manufacturing step is not required and the beads can be used with far less effort and time required to break through the surface coating of bonding agent.

Accordingly, the invention provides a wire saw for immediate use in the cutting of stone, granite or the like; the saw comprising a length of wire having beads of abrasive material thereon the beads comprising a bonded matrix containing abrasive particles embedded in the matrix and not exposed above the surface thereof the beads having an external profile which presents fewer potential lines of contact or a reduced contact area between the bead and the object to be sawn during the initial period of use whereby the preliminary preparation step to remove bonded matrix material from the surface of the beads to expose abrasive particles is avoided.

The external profile of the bead may be, for example, of polygonal transverse section relative to the length of the wire but in a preferred embodiment the profile will be of re-entrant form, e.g. corrugated.

Alternatively, the beads may be of a frusto-conical shape so that they taper in the longitudinal direction of the wire. In this embodiment it is preferred that the taper to the narrow end be in the opposite direction to the intended direction of travel of the wire. Alternatively, the bead may have a double taper, narrowing to a centrally-disposed minimum position and then widening again or alternate single taper beads may be aligned on the wire to taper one way and then the other way.

In another embodiment in which the profiling of the bead is in the longitudinal axis direction, the beads are provided with a re-entrant profile when viewed in longitudinal section. The profile may, for example, be in the form of longitudinally-spaced circumferential ribs which may have a curved or angular profile. Alternatively, the ribs could take the form of a helix on the surface of the bead, such as in the form of a screw thread.

The polygonal beads will present few potential lines of contact in the start-up period. The tapered beads will present a reduced contact area. Re-entrant beads will present either reduced potential lines of contact or reduced contact area dependent on whether the re-entrant profile is in the transverse or longitudinal section relative to the length of the wire.

When using beads whose profile in the transverse section is to provide the features of the invention, it may be advantageous to position successive beads so that they are rotationally displaced on the wire with respect to adjacent beads. Thus, for example, beads of square transverse section can be positioned along the wire so that the second bead is aligned at, say 45°, to the first bead and so on. By this means, it can be ensured that there is contact between the angular corners of the square beads with the material to be cut so that the abrading material is exposed quickly. Similar arrangements could be used for triangular, oval or crescent-shaped beads. Indeed, if desired, different shaped beads could be attached along the one wire.

The beads and saws of the invention may be made by any suitable means and materials and are particularly intended to be made by conventional methods with, of course, the addition of the required profiling.

Thus, the beads may be formed by moulding abrasive powder particles, usually diamond grains of 100 to 1000 microns, with metal powder, e.g. cobalt, bronze, tungsten or tungsten carbide of, usually 1 to 50 microns size. The mixture may, for example, be hot-pressed or cold-pressed then infiltrated with liquid metal to bind all the particles together or it may be heated to sinter the metal/ diamond mixture.

The desired profile will normally be applied to the bead at this stage in a suitable mould although it could, if desired, be applied afterwards by grinding the finished surface.

The wire used may be any conventionally used, usually being in the form of twisted strands of steel. The beads may be attached to the wire by any convenient means. They are moulded to have an axial bore and are threaded on to the wire at intervals. They may be kept in place by spring spacers threaded over the wire between each adjacent pair of beads and usually with a metal cylinder crimped on to the wire every five or six beads. Alternatively, they may be positively locked to the wire by being formed with a crimping attachment or by being moulded in to place by a covering of plastics or rubber material over the wire. In this embodiment, the rubber or plastics material will normally also fill any annular gap between bead and wire.

The invention provides a number of advantages over wire saws having conventional axially-aligned right circular cylindrical beads, which have, as indicated above, hitherto been the norm.

Because of the profiled nature of the beads, an effective cutting surface is exposed more quickly leading to a more efficient cutting operation and less chance of wire breakage or other problems in the start-up period.

By directly moulding the desired profile, the manufacturing operation is simpler than the alternative method of abrading the surface of the cylindrical beads to expose their abrasive medium.

Moreover, the beads and hence saws, of the invention can be made to a more consistently uniform standard. It will be appreciated that abrading a bonded metal/diamond matrix surface is unlikely to lead to a uniformly exposed surface all over the working surface of the bead and consistency from one bead to the next cannot be expected. In contrast, the profiles defined by the beads of the invention at the start-up position will be much more regular, hence giving greater consistency of operation.

Various embodiments of the beads realising the invention are illustrated in the accompanying drawings in which:

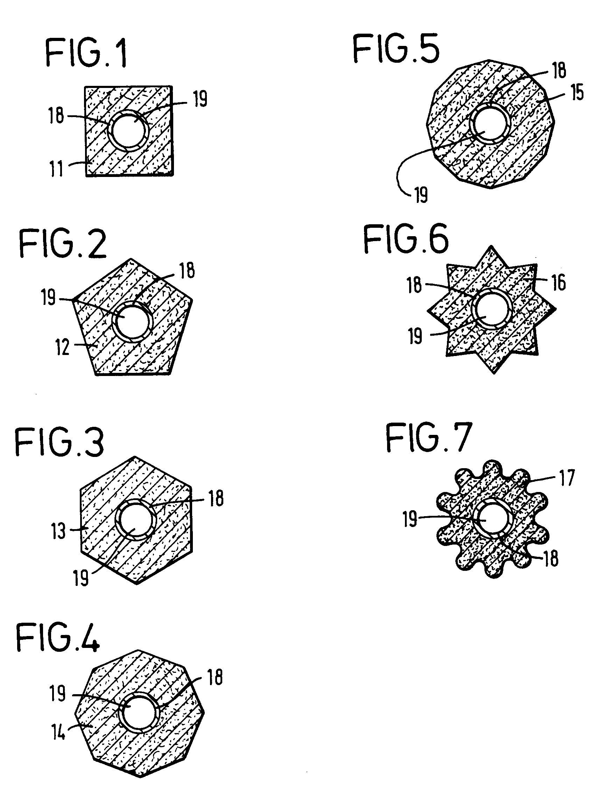

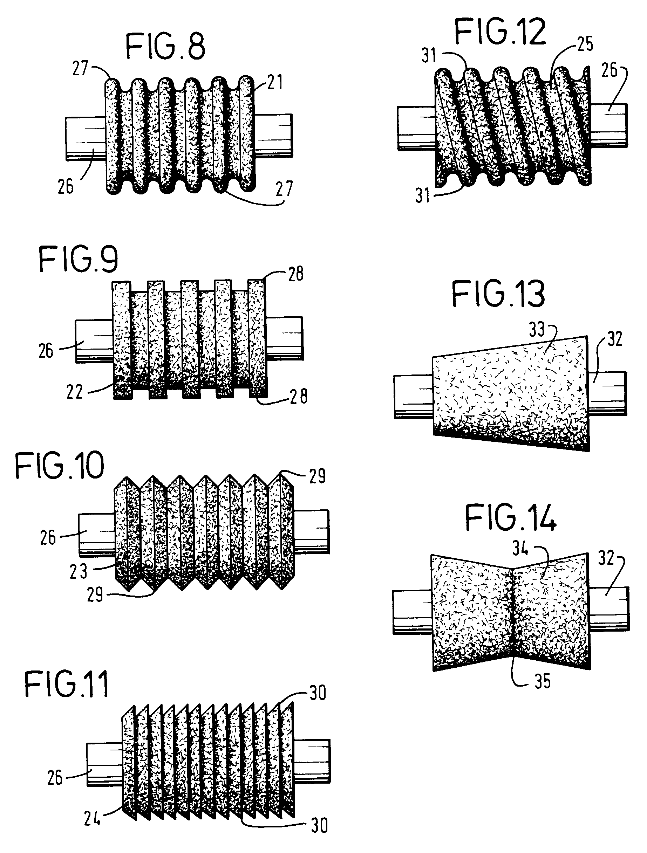

Figures 1 to 7 show a variety of beads of the invention in transverse section and ready for mounting on a wire to form a saw, and Figures 8 to 14 show a variety of different beads in elevation.

Figures 1 to 7 show, respectively, beads 11 to 17 of square, pentagonal, hexagonal, octagonal, duodecagonal, eight pointed star and decafoil shape. Each bead has been formed around and bonded to a central steel tube 18 having a through bore 19 for mounting on a wire.

Figures 8 to 12 show, respectively, beads 21 to 25, each formed around and bonded to a hollow steel tube 26. Bead 21 has a longitudinal profile displaying spaced circumferential ribs 27 of curved profile. Bead 22 has similar spaced ribs 28 of square profile. Bead 23 has a corrugated profile with triangular peaks 29. Bead 24 similarly has a corrugated profile with peaks 30. Bead 25 has a helical surface profile 31.

Figures 13 and 14 show tapered beads, each also formed around and bonded to a hollow steel tube 32. In Figure 13 bead 33 has a single direction of taper to the narrow end from right to left, this being the opposite direction to the intended direction of travel of the wire saw in use.

Figure 14 shows a double taper bead 34 having a centrally-disposed narrow portion 35.

## Claims

1. Wire saw for immediate use in the cutting of stone, granite or the like; the saw comprising a length of wire having beads of abrasive material thereon, the beads comprising a bonded matrix containing abrasive particles embedded in the matrix and not exposed above the surface thereof the beads having an external profile which presents fewer potential lines of contact or a reduced contact area between the bead and the object to be sawn during the initial period of use whereby the preliminary preparation step to remove bonded matrix material from the surface of the beads to expose abrasive particles is avoided.

2. A wire saw according to Claim 1, characterised in that the external profile is of polygonal transverse section relative to the length of the wire.

3. A wire saw according to Claim 1, characterised in that the beads (33) are of frusto-conical section so that they taper in the longitudinal direction of the wire.

4. A wire saw according to Claim 3, characterised in that the taper to the narrow end of the beads (33) is in the opposite direction to the intended direction of travel of the wire during sawing.

5. A wire saw according to Claim 3, characterised in that the beads (34) have a double taper narrowing to a minimum centrally-disposed position (35) and then widening again.

6. A wire saw according to Claim 3, characterised in that single taper beads are aligned on the wire so that one bead tapers in the opposite direction to its immediate neighbours.

7. A wire saw according to Claim 1, characterised in that the external profile (27 to 31) is of re-entrant form.

8. A wire saw according to Claim 7, characterised in that the re-entrant profile is in the form of longitudinally-spaced circumferential ribs (27,28).

9. A wire saw according to Claim 7, characterised in that the re-entrant profile is in the form of a helix (31) on the bead surface.

10. A wire saw according to Claim 2, characterised in that successive beads are positioned on the wire so that they are rotationally displaced with respect to adjacent beads.

11. A wire saw according to Claim 10, characterised in that beads of square transverse section are used, adjacent beads being aligned at 45° to each other.

12. A wire saw according to Claim 2, characterised in that beads of different transverse section are attached along the wire.

13. A wire saw according to any one of the preceding claims, characterised in that the beads are moulded of diamond grains bonded together by fused metal powder.

14. A wire saw according to Claim 13, characterised in that the diamond grains are of 100 to 1000 micron size and they are bonded by fused cobalt, bronze, tungsten or tungsten carbide grains of 1 to 50 microns size.

## Patentansprüche

1. Drahtsäge für den unmittelbaren Einsatz beim Schneiden von Stein, Granit oder ähnlichem, wobei die Säge ein Stück Draht mit Körnern aus abrasivem Material darauf aufweist, wobei die Körner eine gebondete Matrix aufweisen, die abrasive Partikel enthalten, welche in die Matrix eingebettet sind und nicht über deren Oberfläche hinaus vorstehen, wobei die Körner ein Außenprofil haben, das in der Anfangsperiode des Gebrauchs weniger potentielle Kontaktlinien bzw. einen reduzierten Kontaktbereich zwischen dem Korn und dem zu sägenden Objekt darstellt, so daß sich der vorausgehende Vorbereitungsschritt des Entfernens von gebondetem Matrixmaterial von der Oberfläche der Körner zum Freilegen abrasiver Partikel erübrigt.

2. Drahtsäge nach Anspruch 1, dadurch gekennzeichnet, daß das Außenprofil einen polygonalen Querschnitt relativ zur Länge des Drahtes aufweist.

3. Drahtsäge nach Anspruch 1, dadurch gekennzeichnet, daß die Körner (33) kegelstumpfförmig ausgebildet sind, so daß sie sich in Längsrichtung des Drahtes verjüngen.

4. Drahtsäge nach Anspruch 3, dadurch gekennzeichnet, daß die Verjüngung zum engen Ende des Korns (33) in entgegengesetzter Richtung zur beabsichtigten Bewegungsrichtung des Drahtes beim Sägen verläuft.

5. Drahtsäge nach Anspruch 3, dadurch gekennzeichnet, daß sich die Körner (34) auf beiden Seiten bis zu einer in der Mitte befindlichen Mindestposition (35) verjüngen und dann anschließend wieder erweitern.

6. Drahtsäge nach Anspruch 3, dadurch gekennzeichnet, daß Körner mit einfacher Verjüngung so auf dem Draht ausgerichtet sind, daß sich ein Korn in der entgegengesetzten Richtung zu seinen unmittelbaren Nachbarn verjüngt.

7. Drahtsäge nach Anspruch 1, dadurch gekennzeichnet, daß das Außenprofil (27 bis 31) eine in sich zurückkehrende Form aufweist.

8. Drahtsäge nach Anspruch 7, dadurch gekennzeichnet, daß das in sich zurückkehrende Profil die Form von in Längsrichtung voneinander beabstandeten Umfangsrippen (27, 28) hat.

9. Drahtsäge nach Anspruch 7, dadurch gekennzeichnet, daß das in sich zurückkehrende Profil auf der Kornoberfläche die Form eines Wendels (31) hat.

10. Drahtsäge nach Anspruch 2, dadurch gekennzeichnet, daß aufeinanderfolgende Körner auf dem Draht so positioniert sind, daß sie in bezug auf die benachbarten Körner rotationsmäßig verschoben sind.

11. Drahtsäge nach Anspruch 10, dadurch gekennzeichnet, daß Körner mit quadratischem Querschnitt verwendet werden, wobei benachbarte Körner in einem Winkel von 45° zueinander ausgerichtet sind.

12. Drahtsäge nach Anspruch 2, dadurch gekennzeichnet, daß Körner mit unterschiedlichem Querschnitt entlang des Drahtes befestigt sind.

13. Drahtsäge nach einem der vorhergehenden Ansprüche, dadurch gekennzeichnet, daß die Körner aus mit geschmolzenem Metallpulver verbondeten Diamantpartikeln geformt sind.

14. Drahtsäge nach Anspruch 13, dadurch gekennzeichnet, daß die Diamantpartikel eine Größe im Bereich zwischen 100 und 1000 Mikron besitzen, wobei die Partikel durch geschmolzene Kobalt-, Bronze-, Wolfram- oder Wolframkarbidpartikel mit Größen im Bereich zwischen 1 und 50 Mikron verbondet sind.

## Revendications

1. Scie à câble à utiliser telle que pour tailler la pierre, le granit ou autres matériaux analogues ; la scie comprend une section de câble munie d'arêtes coniques en matière abrasive, les arêtes étant conçues à partir d'une matrice combinée contenant des particules abrasives incrustées dans la matrice et non exposées sur la surface de cette dernière, les arêtes coniques ayant un profil externe présentant moins de lignes potentielles de contact ou une surface de contact réduite entre les arêtes coniques et l'objet à scier pendant la première période d'utilisation, ce qui permet d'éviter le besoin d'une première préparation visant à éliminer la matière de la matrice combinée de la surface des arêtes coniques pour exposer les particules abrasives.

2. Scie à câble qui, selon la Revendication 1, est caractérisée en ce que le profil externe consiste en une section transversale ayant une forme polygonale par rapport au sens longitudinal du câble.

3. Scie à câble qui, selon la Revendication 1, est caractérisée en ce que les arêtes coniques (33) ont la forme d'une partie de cône s'effilant dans la direction longitudinale du câble.

4. Scie à câble qui, selon la Revendication 3, est caractérisée en ce que l'effilement vers la partie étroite des arêtes coniques (33) se trouve dans une direction opposée à la direction prévue pour le déplacement du câble pendant le sciage.

5. Scie à câble qui, selon la Revendication 3, est caractérisée en ce que les arêtes coniques (34) sont pourvues de deux effilements rétrécissant vers un point central étroit (35) et qu'elles s'évasent ensuite à nouveau.

6. Scie à câble qui, selon la Revendication 3, est caractérisée en ce que des arêtes coniques à rétrécissement unique sont alignées sur le câble de manière à ce que chaque arête se rétrécisse dans la direction opposée à celle de l'arête suivante.

7. Scie à câble qui, selon la Revendication 1, est caractérisée en ce que le profil externe (de 27 à 31) a une forme rentrante.

8. Scie à câble qui, selon la Revendication 7, est caractérisée en ce que le profil rentrant forme des nervures rondes espacées sur toute leur longueur (27, 28)

9. Scie à câble qui, selon la Revendication 7, est caractérisée en ce que le profil rentrant a une forme hélicoïdale (31) sur la surface des arêtes.

10. Scie à câble qui, selon la Revendication 2, est caractérisée en ce que les arêtes successives sont placées sur le câble de manière à pouvoir se déplacer en pivotant par rapport aux arêtes contiguës.

11. Scie à câble qui, selon la Revendication 10, est caractérisée en ce que des arêtes réunies en sections transversales carrées sont utilisées, des arêtes adjacentes étant alignées à 45° l'une de l'autre.

12. Scie à câble qui, selon la Revendication 2, est caractérisée en ce que des arêtes de différentes sections transversales sont attachées le long du câble.

13. Scie à câble qui, selon toute Revendication précédente, est caractérisée en ce que les arêtes sont moulées à partir de grains diamantés unis par de la poudre de métal fondue.

14. Scie à câble qui, selon la Revendication 13, est caractérisée en ce que la taille des grains diamantés varie de 100 à 1000 microns et que les grains sont liés par du cobalt fondu, du bronze fondu, du tungstène ou des grains de carbure de tungstène dont la taille est de 1 à 50 microns.
